# EUROPÄISCHE PATENTANMELDUNG

(11) **EP 2 650 053 A2**
(43) Veröffentlichungstag der Anmeldung: **16.10.2013**
(21) Anmeldenummer: 13001351.9
(22) Anmeldetag: 16.03.2013
(51) Int. Cl.: B05B 15/12

(54) **Verfahren und Anlage zum Behandeln von Gegenständen**

(30) Priorität: 13.04.2012 DE 102012007277
(71) Anmelder: Eisenmann AG, 71032 Böblingen (DE)
(72) Erfinder: Schmidt, Horst Dietmar, D-71093 Weil im Schönbuch (DE); Hanschke, Michael, D-72135 Dettenhausen (DE); Barwich, Roland, D-72218 Wildberg (DE); Wagner, Andreas, D-71093 Weil im Schönbuch (DE)
(74) Vertreter: Heinrich, Hanjo

(57) **Zusammenfassung**

Bei einem Verfahren zum Behandeln, insbesondere zum Vorbehandeln, von Gegenständen werden die Gegenstände in wenigstens einer Behandlungszone (16) eines Behandlungstunnels (14) mit einem lösemittelhaltigen Behandlungsmedium behandelt, wobei in der Behandlungszone (16) eine lösemittelhaltige Zonenatmosphäre herrscht oder entsteht und zumindest ein Teil der Zonenatmosphäre aus der Behandlungszone (16) abgesaugt wird. Zumindest ein Teil der abgesaugten Zonenatmosphäre wird in den Behandlungstunnel (14) zurückgeführt. Ferner ist eine Behandlungsanlage, insbesondere eine Vorbehandlungsanlage, für Gegenstände mit wenigstens einem Behandlungstunnel (14) angegeben, in dem wenigstens eine Behandlungszone (16) untergebracht ist, in der eine lösemittelhaltige Zonenatmosphäre herrscht oder entsteht. In der wenigstens einen Behandlungszone (16) ist eine Behandlungseinrichtung (24) angeordnet, durch welche die Gegenstände mit einem lösemittelhaltigen Behandlungsmedium behandelbar sind. Mittels einer Absaugeinrichtung (38; 58) ist zumindest ein Teil der Zonenatmosphäre aus der Behandlungszone (16) absaugbar. Durch eine Rückführeinrichtung (50; 62) ist zumindest ein Teil der abgesaugten Zonenatmosphäre in den Behandlungstunnel (14) rückführbar.

## Beschreibung

Die Erfindung betrifft ein Verfahren zum Behandeln, insbesondere zum Vorbehandeln, von Gegenständen, bei welchem
a) die Gegenstände in wenigstens einer Behandlungszone eines Behandlungstunnels mit einem lösemittelhaltigen Behandlungsmedium behandelt werden, wobei in der Behandlungszone eine lösemittelhaltige Zonenatmosphäre herrscht oder entsteht;
b) zumindest ein Teil der Zonenatmosphäre abgesaugt wird. Außerdem befasst sich die Erfindung mit einer Behandlungsanlage, insbesondere mit einer Vorbehandlungsanlage, für Gegenstände mit
a) wenigstens einem Behandlungstunnel, in dem wenigstens eine Behandlungszone untergebracht ist, in der eine lösemittelhaltige Zonenatmosphäre herrscht oder entsteht;
b) einer in der wenigstens einen Behandlungszone angeordneten Behandlungseinrichtung, durch welche die Gegenstände mit einem lösemittelhaltigen Behandlungsmedium behandelbar sind;
c) einer Absaugeinrichtung, mittels welcher zumindest ein Teil der Zonenatmosphäre absaugbar ist.

Ein derartiges Verfahren und eine derartige Anlage sind beispielsweise aus der EP 1 782 890 B1 bekannt. Unter anderem werden in der Automobilindustrie in solchen Anlagen Fahrzeugkarosserien oder Karosserieteile im Rahmen einer Vorbehandlung gereinigt und entfettet, bevor sie hiernach mit einer Beschichtung, wie z.B. einer Lackierung, versehen werden. Hierzu werden die Fahrzeugkarosserien oder Karosserieteile in der Behandlungsanlage durch mehrere Behandlungszonen geführt und dort in mehreren Schritten mit verschiedenen Behandlungsmedien behandelt. Eine solche Behandlung kann durch eine Sprüh- oder Tauchbehandlung erfolgen.

Damit die Behandlung möglichst effektiv ist, wird das Behandlungsmedium auf eine gegenüber der Umgebungstemperatur erhöhte Temperatur erwärmt, die zwischen 50°C und 90°C betragen kann. In den Behandlungszonen liegt eine entsprechend erhöhte Temperatur vor.

Bei diesen Temperaturen verdampft ein Teil des Behandlungsmediums, zumindest aber ein Teil von dessen Lösemittel, und wird von der in der Behandlungszone herrschenden Atmosphäre aufgenommen, so dass dort eine lösemittelhaltige Zonenatmosphäre herrscht, in der gegebenenfalls auch noch andere aus dem Behandlungsmedium stammende Substanzen in Form von Partikeln, Tröpfchen oder Gas mitgeschleppt werden.

Die Zonenatmosphäre breitet sich jedoch ohne weitere Maßnahmen in dem Behandlungstunnel über die verschiedenen Zonen hinweg aus. Hierdurch werden jedoch die Atmosphären in benachbarten oder sogar weiter entfernten Behandlungszonen durch die mitgeschleppten Substanzen in unerwünschter Weise kontaminiert; in die Atmosphäre einer Spülzone sollten jedoch beispielsweise keine Reinigungssubstanzen aus einer Reinigungszone eindringen, die sich sonst wieder auf den Gegenständen absetzen können.

Aus diesem Grund wird bei bekannten Anlagen und Verfahren die Zonenatmosphäre oder die Zonenatmosphären aus dem Behandlungstunnel abgesaugt und durch eine unbeladene Atmosphäre ersetzt. Da eine Zonenatmosphäre auch erhebliche Wärmemengen mit sich trägt, wird dem Behandlungstunnel hierdurch jedoch Wärme entzogen. Demzufolge muss zusätzliche Energie aufgebracht werden, um die erforderlichen Betriebstemperaturen in dem Behandlungstunnel und den jeweiligen Behandlungszonen zu halten.

Es ist nun Aufgabe der Erfindung, ein Verfahren und eine Behandlungsanlage der eingangs genannten Art zu schaffen, welche diesen Gedanken Rechnung tragen.

Diese Aufgabe wird bei einem Verfahren der eingangs genannten Art dadurch gelöst, dass
c) zumindest ein Teil der abgesaugten Zonenatmosphäre in den Behandlungstunnel zurückgeführt wird.

Hierbei wird Zonenatmosphäre nur in solche Zonen des Behandlungstunnels zurückgeführt, in denen keine unerwünschte Kontamination durch die rückgeführte Zonenatmosphäre erfolgen kann. Insgesamt kann durch diese Maßnahme aber die Energiebilanz der Anlage verbessert werden. Verdampfungsverluste über das Behandlungsmedium sind verringert, da die rückgeführte Zonenatmosphäre mit Lösemittel gesättigt ist, so dass es zu keinem weiteren merklichen Übergang von Lösemittel in die Zonenatmosphäre kommt. Zugleich kann dort, wo eine Atmosphärenübergang zwischen zwei möglichen Behandlungszonen verhindert werden muss, eine effektive Dampfsperre aufgebaut werden; dies wird im Folgenden noch klarer.

Zunächst ist es günstig, wenn Zonenatmosphäre über eine oder mehrere Absaugöffnungen aus der Behandlungszone abgesaugt wird. So kann die Zonenatmosphäre direkt am Ort ihrer Entstehung aufgenommen werden.

Wenn rückgeführte Zonenatmosphäre am Eingang und/oder am Ausgang einer Behandlungszone in den Behandlungstunnel abgegeben wird, kann ein wirkungsvolles Umwälzen der Zonenatmosphäre erreicht werden.

Dabei ist es besonders von Vorteil, wenn Zonenatmosphäre in Richtung auf die Mitte der Behandlungszone abgegeben wird. Auf diese Weise lässt sich eine Dampfsperre zu einer benachbarten Behandlungszone aufbauen. Die rückgeführte Zonenatmosphäre bildet eine Gegenströmung gegen die Atmosphäre in der Behandlungszone, die sich über den Behandlungstunnel verteilen will und hält diese in der zugehörigen Behandlungszone.

Es ist von Vorteil, wenn rückzuführende Zonenatmosphäre durch einen Aerosolabscheider geleitet wird, um mitgeschleppte Flüssigkeitströpfchen und/oder Partikel vor dem Wiedereintritt in die Behandlungszone zu entfernen.

Wenn rückzuführende Zonenatmosphäre durch einen Wärmetauscher geleitet wird, kann deren thermische Energie für andere Prozesse nutzbar gemacht werden. In dem Wärmetauscher kühlt die Zonenatmosphäre aus, wobei mitgeführtes Lösemittel auskondensiert. Wenn die kühlere rückgeführte Zonenatmosphäre sich in der Behandlungszone wieder erwärmt, kann sie zwar wieder Lösemittel aufnehmen, wodurch es wieder zu einem Verdampfungsverlust kommt. Insgesamt kann dieser Verdampfungsverlust jedoch immer noch kleiner gehalten werden, als es ohne die Rückführung der Zonenatmosphäre möglich wäre.

Indem im Wärmetauscher entstehendes Kondensat zu einer Behandlungseinrichtung geleitet wird, kann das Behandlungsmedium effektiv recycelt werden. Gegebenenfalls wird das Behandlungsmedium vor seiner Wiederverwertung noch einer Aufbereitung unterzogen.

Wenn rückzuführende Zonenatmosphäre stromab des Wärmetauschers durch eine Nacherhitzungseinrichtung geleitet wird, entzieht die rückgeführte Zonenatmosphäre der Behandlungszone keine oder weniger Wärme.

Die Rückführung von Zonenatmosphäre ist besonders effektiv, wenn Behandlungsmedium auf die Gegenstände gesprüht wird. Dort ist der Übergang von Lösemittel in die Zonenatmosphäre besonders prägnant.

Im Hinblick auf eine Anlage der eingangs genannten Art wird die oben angegebene Aufgabe gelöst durch
d) eine Rückführeinrichtung, durch welche zumindest ein Teil der abgesaugten Zorienatmosphäre in den Behandlungstunnel rückführbar ist.

Die Vorteile dieser und der nachfolgend erläuterten Maßnahmen entsprechen den Vorteilen, die oben zu den vergleichbaren Verfahrensmerkmalen erläutert wurden.

Es ist folglich günstig, wenn durch die Absaugeinrichtung Zonenatmosphäre über eine oder mehrere Absaugöffnungen aus der Behandlungszone absaugbar ist.

Vorzugsweise ist rückgeführte Zonenatmosphäre über Abgabemittel abgebbar, die am Eingang und/oder am Ausgang einer Behandlungszone angeordnet sind.

Dabei kann rückgeführte Zonenatmosphäre bevorzugt in Richtung auf die Mitte der Behandlungszone abgegeben werden.

Außerdem ist es vorteilhaft, wenn im Strömungsweg der rückzuführenden Zonenatmosphäre ein Aerosolabscheider angeordnet ist.

Aus den oben genannten Gründen ist es günstig, wenn im Strömungsweg der rückzuführenden Zonenatmosphäre ein Wärmetauscher angeordnet ist.

Ebenfalls bevorzugt ist im Wärmetauscher entstehendes Kondensat über eine Leitung zu einer Behandlungseinrichtung förderbar.

Vorzugsweise ist außerdem stromab des Wärmetauschers im Strömungsweg der rückzuführenden Zonenatmosphäre eine Nacherhitzungseinrichtung angeordnet.

Besonders effektiv ist es, wenn die Behandlungseinrichtung eine Sprüheinrichtung ist.

Nachfolgend werden Ausführungsbeispiele der Erfindung anhand der Zeichnungen näher erläutert. In diesen zeigen:
- Figur 1: schematisch eine Vorbehandlungsanlage für Gegenstände, bei der zwei Umwälzeinrichtungen zum Umwälzen der Atmosphäre anhand zweier Behandlungszonen veranschaulicht ist;
- Figur 2: schematisch die Vorbehandlungsanlage nach Figur 1, wobei eine dritte Art einer Umwälzeinrichtung gezeigt ist.

In den Figuren ist mit 10 insgesamt eine Vorbehandlungsanlage für nicht gesondert gezeigte Gegenstände bezeichnet, in welcher die Gegenstände gereinigt und entfettet werden, bevor sie z.B. in nachfolgenden Arbeitsstationen in mehrerer Arbeitsschritten mit einer Beschichtung, wie beispielsweise einer Lackierung, versehen werden.

Die Anlage 10 umfasst eine Gehäuse 12, welches einen Behandlungstunnel 14 begrenzt, in dem mehrere Behandlungszonen 16 untergebracht sind. Beim vorliegenden Ausführungsbeispiel sind vier solche Behandlungszonen 16 in Form einer Reinigungszone 16.1, einer Phosphatierungszone 16.2 und zwei Spülzonen 16.3 und 16.4 gezeigt. Abhängig von den für die Vorbehandlung insgesamt erforderlichen Behandlungsschritten können in der Anlage 10 auch mehr oder weniger als vier Behandlungszonen 16 vorhanden sein.

Die zu behandelnden Gegenstände werden in an und für sich bekannter Art und Weise mittels eines ebenfalls nicht eigens gezeigten Transportsystems in einer Förderrichtung 18 durch den Behandlungstunnel 14 gefördert. An den Stirnseiten des Behandlungstunnels 14 können Schleusen vorgesehen sein, welche den Durchgang der Gegenstände in den Behandlungstunnel 14 hinein und aus diesem heraus ohne großen Wärmeverlust und mit geringem Atmosphärenaustausch ermöglichen.

Bevor die Gegenstände zur Reinigungszone 16.1 gelangen, durchlaufen sie beim vorliegenden Ausführungsbeispiel eine Eintrittzone in Form einer Vorwärmzone 20, in welcher die Gegenstände auf eine Arbeitstemperatur erwärmt werden. Diese Temperatur kann beispielsweise bei etwa 60°C liegen und herrscht auch in der Reinigungszone 16.1, die sich an die Vorwärmzone 20 anschließt. In weiteren Behandlungszonen wie beispielsweise den Spülzonen 16.3 und 16.4 kann die Temperatur demgegenüber nochmals höher sein und bei etwa 90°C liegen.

In die Vorwärmzone 20 kann als Wärmequelle z.B. warme und gereinigte Abluft, die in anderen Prozessen entsteht, über eine Zulufteinrichtung 22 eingeblasen werden, welche ein Gebläse 22a und eine Drosselklappe 22b umfasst, über welche der Volumenstrom der zugeführten Abluft eingestellt werden kann.

Abhängig von der Art der Behandlung werden die Gegenstände jeweils mit einem auf eine bestimmte Behandlungszone 16.1, 16.2, 16.3 und 16.4 abgestimmten Behandlungsmedium behandelt. In der Reinigungszone 16.1 ist dies eine Reinigungslösung, in der Phosphatierungszone 16.2 eine Phosphatlösung und in den Spülzonen 16.3 und 16.4 jeweils ein Spülmedium. Ein solches Behandlungsmedium umfasst ein Lösemittel wie Wasser oder ein organisches Lösemittel und entsprechende Zusätze - im Falle des Reinigungsmediums beispielsweise Tenside.

In jeder Behandlungszone 16 ist eine Behandlungseinrichtung 24 vorhanden, welche beim vorliegenden Ausführungsbeispiel als Sprüheinrichtungen 26 ausgebildet sind. Alternativ kann die jeweilige Behandlung beispielsweise auch durch ein Tauchbad erfolgen.

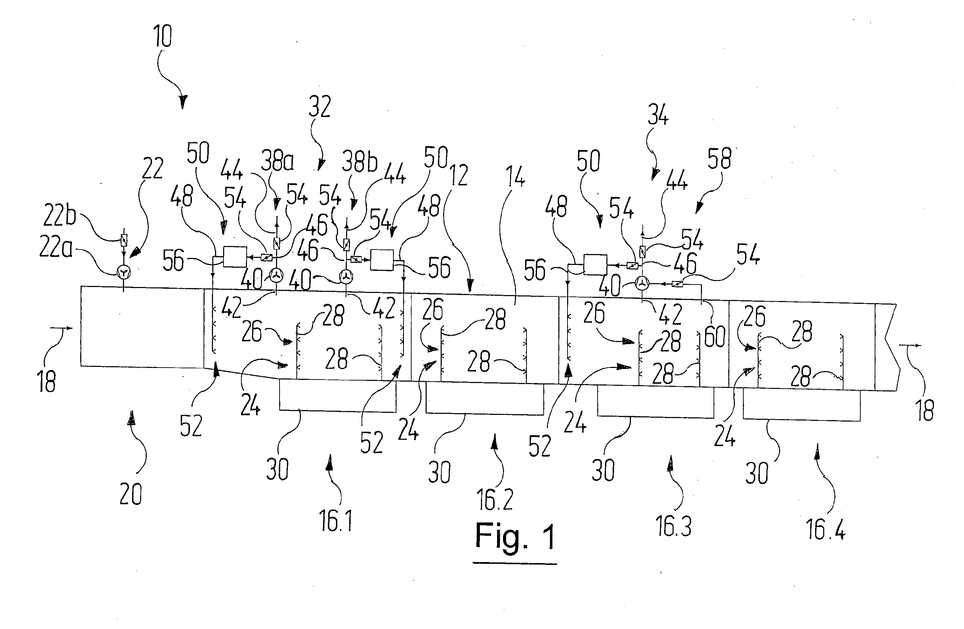

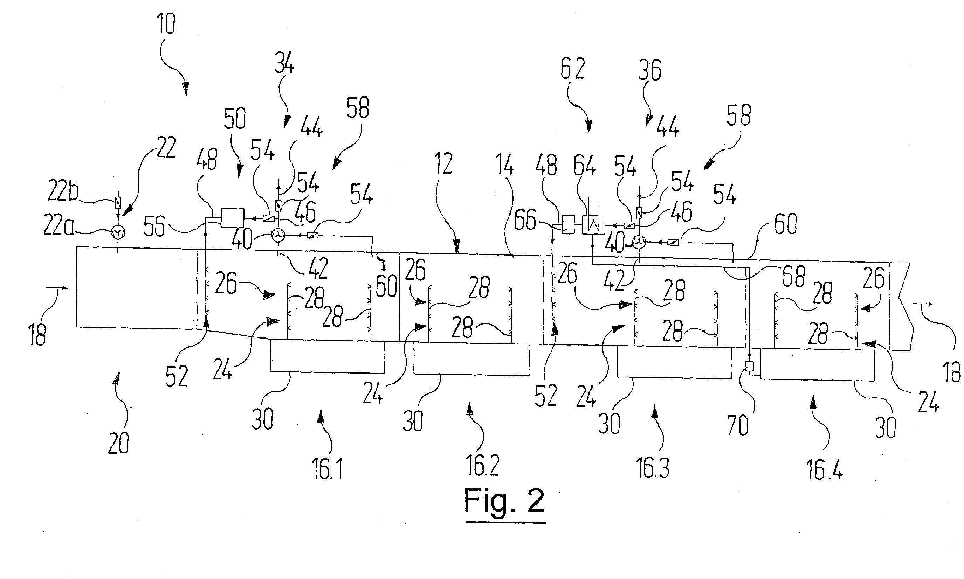

Jede Sprüheinrichtung 26 umfasst Düsenstöcke 28, die aus einem Reservoir 30 gespeist werden, welches mit dem jeweiligen Behandlungsmedium gefüllt ist. Dieses Behandlungsmedium wird entsprechend über die Düsenstöcke 28 auf die zu behandelnden Gegenstände gesprüht. Auf Grund der in den Behandlungszonen 16 herrschenden und aufrechterhaltenen Temperaturen geht ein Teil des jeweiligen Behandlungsmediums, zumindest aber ein Teil von dessen Lösemittel, gasförmig in die Zonenatmosphäre über, wie es eingangs erläutert wurde. Nachfolgend sei angenommen, dass die Behandlungen in den Behandlungszonen 16 in Luft erfolgen. Davon abweichend kann jedoch auch eine Atmosphäre aus anderen Gasen vorhanden sein, beispielsweise aus einem Inertgas. Wenn nachfolgend von Zonenluft die Rede ist, ist damit eine ursprünglich aus der jeweiligen Behandlungszone stammende Atmosphäre gemeint, welche Gas-, Flüssigkeits- und Feststoffbestandteile mit sich schleppen kann. Diese Zonenluft wird mittels Umwälzeinrichtungen aus der jeweiligen Behandlungszone 16 abgesaugt und zumindest teilweise wieder in die jeweilige Behandlungszone zurückgeführt, wobei die rückgeführte Zonenluft gegenüber der ursprünglichen Zonenluft verändert worden sein kann. In den Figuren 1 und 2 sind insgesamt drei unterschiedlich ausgebildete Umwälzeinrichtungen 32, 34 und 36 in der Reinigungszone 16.1 und der Spülzone 16.3 veranschaulicht. Bei den Umwälzeinrichtungen 32, 34 und 36 bezeichnen dieselben Bezugszeichen dieselben Komponenten.

In Figur 1 ist in der Reinigungszone 16.1 nun eine erste Umwälzeinrichtung 32 gezeigt, bei welcher zwei separate Absaugeinrichtungen 38 vorhanden sind, die mit 38a und 38b bezeichnet sind. Bei jeder Absaugeinrichtung 38 wird Zonenluft aus der Behandlungszone 16 durch ein Gebläse 40 über eine Absaugöffnung in Form eines Saugstutzens 42 abgesaugt und zu einer Abgabeleitung 44 gefördert, über welche abgesaugte Zonenluft über Dach abgeführt werden kann.

Die Abgabeleitung 44 ist über eine stromab des Gebläses 40 angeordnete Verzweigung 46 zugänglich, welche neben der Abgabeleitung 44 außerdem mit einer Rückführleitung 48 einer Rückführeinrichtung 50 einer ersten Art verbunden, über welche abgesaugte Zonenluft wieder in die Reinigungszone 16.1 zurückgeführt werden kann. Die Rückführleitung 48 führt zu Abgabemitteln, die beim vorliegenden Ausführungsbeispiel als Rückführdüsenstock 52 ausgebildet sind, der in der Reinigungszone 16.1 angeordnet ist.

In der Rückführleitung 48 einer Rückführeinrichtung 50 und in jeder Abgabeleitung 44 der Absaugeinrichtungen 38a, 38b ist jeweils ein Klappenventil 54 angeordnet, so dass der Anteil von zurückgeführter und über Dach abgeführter Zonenluft eingestellt werden kann.

Außerdem ist im Strömungsweg der rückgeführten Zonenluft, d.h. beim vorliegenden Ausführungsbeispiel in der Rückführleitung 48 einer Rückführeinrichtung 50, ein Aerosolabscheider 56 angeordnet, wie er beispielsweise an und für sich unter dem Begriff Demister bekannt ist. Durch diese Aerosolabscheider 56 werden von der jeweiligen Zonenluft mitgeschleppte flüssige Bestandteile entfernt, bevor die Zonenluft wieder in die jeweilige Behandlungszone 16 eingeblasen wird.

Die Umwälzeinrichtung 32 in der Reinigungszone 16.1 umfasst somit zwei Absaugeinrichtungen 38a, 38b, die jeweils mit einer eigenen Rückführeinrichtung 50 zusammenarbeiten. Dabei ist der Rückführdüsenstock 52, über den durch die Absaugeinrichtung 38a abgesaugte Zonenluft rückgeführt wird, am Eingang der Reinigungszone 16.1 angeordnet und so ausgerichtet, dass zurückgeführte Zonenluft in Förderrichtung 18 in die Reinigungszone 16.1 eingeblasen wird.

Der Rückführdüsenstock 52 der Rückführeinrichtung 50, welche mit der zweiten Absaugeinrichtung 38b zusammenarbeitet, ist dagegen am Ausgang der Reinigungszone angeordnet und so ausgerichtet, dass zurückgeführte Zonenluft entgegen der Förderrichtung 18 eingeblasen wird.

Allgemein ausgedrückt, wird rückgeführte Zonenluft in Richtung auf die Mitte einer Behandlungszone 16 abgegeben, unabhängig davon, ob der Rückführdüsenstock 52 am Eingang oder am Ausgang dieser Behandlungszone 16 angeordnet ist.

Auf diese Weise lässt sich eine Dampfsperre zu einer benachbarten Behandlungszone aufbauen. Die rückgeführte Zonenatmosphäre bildet so eine Gegenströmung gegen die schon vorhandene Atmosphäre in der Behandlungszone, die sich über den Behandlungstunnel verteilen will.

In Figur 1 ist in der Spülzone 16.3 eine abgewandelte Umwälzeinrichtung 34 gezeigt. Bei dieser ist nur eine Absaugeinrichtung 58 vorhanden, bei welcher das Gebläse 40 jedoch anders als bei den Absaugeinrichtungen 38 in der Reinigungszone 16.1 außerdem mit einer zweiten Absaugöffnung in Form eines zweiten Ansaugstutzen 60 verbunden ist, so dass das Gebläse 40 an zwei Stellen Zonenluft aus der Spülzone 16.3 absaugen kann. Im Strömungsweg von dem zweiten Ansaugstutzen 60 zum Gebläse 40 befindet sich ebenfalls ein Klappenventil 54, so dass der Anteil der über den ersten oder den zweiten Saugstutzen 42 oder 60 abgesaugten Zonenluft eingestellt werden kann.

Die Verzweigung 46 führt wieder zu einer Rückführeinrichtung 50, deren Rückführdüsenstock 52 am Eingang der Spülzone 16.3 angeordnet ist und rückgeführte Zonenluft in Förderrichtung 18 in die Spülzone 16.3 einblasen kann.

Beim Ausführungsbeispiel der Anlage 10 nach Figur 2 ist nun in der Reinigungszone 16.1 eine solche Umwälzeinrichtung 34 vorhanden, ohne dass dort ein Rückführdüsenstock am Zonenausgang vorgesehen ist.

In der Spülzone 16.3 ist eine nochmals abgewandelte Umwälzeinrichtung 36 gezeigt, die wieder eine Absaugeinrichtung 58 mit zwei Saugstutzen 42 und 60 umfasst. Bei der Umwälzeinrichtung 36 ist eine modifizierte Rückführeinrichtung vorhanden, die das Bezugszeichen 62 trägt.

Bei dieser sind in der Rückführleitung 48 anstelle des Aerosolabscheiders 56 in Strömungsrichtung ein Wärmetauscher 64 und eine Nacherhitzungseinrichtung 66 angeordnet. Durch den Wärmetauscher 64 wird die thermische Energie der Zonenluft für einen parallelen Prozess nutzbar. Da die Zonenluft beim Durchströmen des Wärmetauschers 64 abkühlt, würde sie die gewünschte Betriebstemperatur in der Spülzone 16.3 jedoch verringern. Daher durchströmt die abgekühlte Zonenluft die Nacherhitzungseinrichtung 66, wo sie wieder auf die Ausgangstemperatur erwärmt wird, bevor sie zum Rückführdüsenstock 52 und wieder in die Spülzone 16.3 gelangt.

Wenn der Zonenluft im Wärmetauscher 64 Wärme entzogen wird, kondensiert dort Lösemittel, gegebenenfalls mit mitgeschleppten Partikeln, aus. Dieses auskondensierte Lösemittel gelangt über eine Leitung 68 zu einer Aufbereitungseinheit 70, wie beispielsweise einer Filtereinheit, und strömt von dieser in das Reservoir 30 der zweiten Spülzone 16.4. Aus diesem Reservoir kann das so rezyklierte und aufbereitete Lösemittel für einen zweiten Spülvorgang in der zweiten Spülzone 16.4 genutzt werden.

Bei einer nicht eigens gezeigten Abwandlung kann eine Umwälzeinrichtung auch durch eine Kombination der Absaugeinrichtung 38 der Umwälzeinrichtung 32 und mit der Rückführeinrichtung 62 der Umwälzeinrichtung 36 gebildet sein.

Bei ebenfalls nicht eigens gezeigten Abwandlungen kann die Rückführung von Zonenluft auch in eine andere Behandlungszone 16 erfolgen als diejenige, aus der die Zonenluft stammt.

## Patentansprüche

1. Verfahren zum Behandeln, insbesondere zum Vorbehandeln, von Gegenständen, bei welchem
a) die Gegenstände in wenigstens einer Behandlungszone (16) eines Behandlungstunnels (14) mit einem lösemittelhaltigen Behandlungsmedium behandelt werden, wobei in der Behandlungszone (16) eine lösemittelhaltige Zonenatmosphäre herrscht oder entsteht;
b) zumindest ein Teil der Zonenatmosphäre abgesaugt wird,
**dadurch gekennzeichnet, dass**
c) zumindest ein Teil der abgesaugten Zonenatmosphäre in den Behandlungstunnel (14) zurückgeführt wird.

2. Verfahren nach Anspruch 1, **dadurch gekennzeichnet, dass** Zonenatmosphäre über eine oder mehrere Absaugöffnungen (42; 42, 60) aus der Behandlungszone (16) abgesaugt wird.

3. Verfahren nach Anspruch 1 oder 2, **dadurch gekennzeichnet, dass** rückgeführte Zonenatmosphäre am Eingang und/oder am Ausgang einer Behandlungszone (16) in den Behandlungstunnel (14) abgegeben wird.

4. Verfahren nach Anspruch 3, **dadurch gekennzeichnet, dass** rückgeführte Zonenatmosphäre in Richtung auf die Mitte der Behandlungszone (16) abgegeben wird.

5. Verfahren nach einem der Ansprüche 1 bis 4, **dadurch gekennzeichnet, dass** rückzuführende Zonenatmosphäre durch einen Aerosolabscheider (56) geleitet wird.

6. Verfahren nach einem der Ansprüche 1 bis 5, **dadurch gekennzeichnet, dass** rückzuführende Zonenatmosphäre durch einen Wärmetauscher (64) geleitet wird.

7. Verfahren nach Anspruch 6, **dadurch gekennzeichnet, dass** im Wärmetauscher (64) entstehendes Kondensat zu einer Behandlungseinrichtung (24) geleitet wird.

8. Verfahren nach Anspruch 6 oder 7, **dadurch gekennzeichnet, dass** rückzuführende Zonenatmosphäre stromab des Wärmetauschers (64) durch eine Nacherhitzungseinrichtung (66) geleitet wird.

9. Verfahren nach einem der Ansprüche 1 bis 8, **dadurch gekennzeichnet, dass** Behandlungsmedium auf die Gegenstände gesprüht wird.

10. Behandlungsanlage, insbesondere Vorbehandlungsanlage, für Gegenstände mit
a) wenigstens einem Behandlungstunnel (14), in dem wenigstens eine Behandlungszone (16) untergebracht ist, in der eine lösemittelhaltige Zonenatmosphäre herrscht oder entsteht;
b) einer in der wenigstens einen Behandlungszone (16) angeordneten Behandlungseinrichtung (24), durch welche die Gegenstände mit einem lösemittelhaltigen Behandlungsmedium behandelbar sind;
c) einer Absaugeinrichtung (38; 58), mittels welcher zumindest ein Teil der Zonenatmosphäre absaugbar ist, **gekennzeichnet durch**
d) eine Rückführeinrichtung (50; 62), **durch** welche zumindest ein Teil der abgesaugten Zonenatmosphäre in den Behandlungstunnel (14) rückführbar ist.

11. Behandlungsanlage nach Anspruch 10, **dadurch gekennzeichnet, dass** durch die Absaugeinrichtung (38; 58) Zonenatmosphäre über eine oder mehrere Absaugöffnungen (42; 42, 60) aus der Behandlungszone (16) absaugbar ist.

12. Behandlungsanlage nach Anspruch 10 oder 11, **dadurch gekennzeichnet, dass** rückgeführte Zonenatmosphäre über Abgabemittel (52) abgebbar sind, die am Eingang und/oder am Ausgang einer Behandlungszone (16) angeordnet sind.

13. Verfahren nach Anspruch 12, **dadurch gekennzeichnet, dass** rückgeführte Zonenatmosphäre in Richtung auf die Mitte der Behandlungszone (16) abgebbar ist.

14. Behandlungsanlage nach einem der Ansprüche 10 bis 13,
**dadurch gekennzeichnet, dass** im Strömungsweg (48) der rückzuführenden Zonenatmosphäre ein Aerosolabscheider (56) angeordnet ist.

15. Behandlungsanlage nach einem der Ansprüche 10 bis 14,
**dadurch gekennzeichnet, dass** im Strömungsweg (48) der rückzuführenden Zonenatmosphäre ein Wärmetauscher (64) angeordnet ist.

16. Behandlungsanlage nach Anspruch 15, **dadurch gekennzeichnet, dass** im Wärmetauscher (64) entstehendes Kondensat
über eine Leitung (68) zu einer Behandlungseinrichtung (24) förderbar ist.

17. Behandlungsanlage nach Anspruch 15 oder 16, **dadurch gekennzeichnet, dass** stromab des Wärmetauschers (64) im Strömungsweg (48) der rückzuführenden Zonenatmosphäre eine Nacherhitzungseinrichtung (66) angeordnet ist.

18. Behandlungsanlage nach einem der Ansprüche 10 bis 17,
**dadurch gekennzeichnet, dass** die Behandlungseinrichtung (24) eine Sprüheinrichtung (26) ist.
